(19) Europäisches Patentamt
European Patent Office
Office européen des brevets

(11) **EP 1 548 416 B1**

(12) **EUROPÄISCHE PATENTSCHRIFT**

(45) Veröffentlichungstag und Bekanntmachung des Hinweises auf die Patenterteilung:
**25.04.2012   Patentblatt 2012/17**

(51) Int Cl.:
***G01K 3/14*** *(2006.01)*

(21) Anmeldenummer: **04030272.1**

(22) Anmeldetag: **21.12.2004**

(54) **Verfahren und Vorrichtung zur Temperaturüberwachung entlang einer Messleitung**

Method and device for controlling the temperature along a measuring line

Méthode et dispositif pour contrôler la température le long d'une ligne de mesure

(84) Benannte Vertragsstaaten:
**ES FR GB IT SE**

(30) Priorität: **22.12.2003   DE 10360485**

(43) Veröffentlichungstag der Anmeldung:
**29.06.2005   Patentblatt 2005/26**

(73) Patentinhaber: **Airbus Operations GmbH**
**21129 Hamburg (DE)**

(72) Erfinder:
• **Schaumann, Oliver**
**21035 Hamburg (DE)**
• **Grönning, Wilhelm**
**22309 Hamburg (DE)**
• **Schuldt, Martin**
**26160 Bad Zwischenahn (DE)**

(74) Vertreter: **Kopf, Korbinian Paul**
**Maiwald Patentanwalts GmbH**
**Elisenhof**
**Elisenstrasse 3**
**80335 München (DE)**

(56) Entgegenhaltungen:
**EP-A- 0 692 705     EP-A2- 0 940 789**
**EP-A2- 1 239 432     US-A- 3 493 949**
**US-A- 5 467 942**

## Beschreibung

Die vorliegende Erfindung betrifft eine Erfassungseinrichtung zum Erfassen eines Ortes entlang einer Messleitung an dem eine Temperaturänderung stattfindet und ein Verfahren zum Erfassen eines Ortes entlang einer Messleitung an dem eine Temperaturänderung stattfindet.

Verkehrsflugzeuge heutiger Bauart verwenden üblicherweise heiße Zapfluft von den Triebwerken unter anderem für die Klimatisierung der Kabine. Hierfür sind Heißluftversorgungsrohre von den Triebwerken zu der Kabine verlegt. Die Heißluftversorgungsrohre sind mit Wamdrähten zur Detektion von Leckagen versehen. Üblicherweise ist diese Sensorleitung ein Koaxialkabel mit Mittelleiter und Hülle mit thermisch-empfindlichen, eutektischen Salz als Isolierung. Wenn eine starke Erwärmung durch eine Leckage in irgendeinem Punkt entlang der Messdrahtlänge auftritt, sinkt der Widerstand des eutektischen Salzes innerhalb des erwärmten Abschnitts und sorgt dafür, dass der Strom zwischen der äußeren Hülle und dem Mittelleiter zu fließen beginnt. Dieser Kurzschluss wird dann über eine Steuereinheit gemessen. Für eine genaue Lokalisierung der Leckage und zur Erleichterung der Wartbarkeit des Systems wird heute üblicherweise ein Brückenmessverfahren verwendet.

Solch ein Brückenmessverfahren, d.h. die Lokalisierung der Leckage über eine Messbrücke bedingt jedoch eine aufwendige Gestaltung der Sensorleitung. Da die Sensorleitungslängen beispielsweise in einem großen Passagierflugzeug erheblich sein können (bis 400m), führt dies zu einem hohen Systemgewicht und zu hohen Kosten.

Solch ein doppeladriges Kabel mit Mittelleiter und Hülle mit thermisch-empfindlichem eutektischen Salzes ist darüber hinaus nur für eine Temperaturschwelle einsetzbar, die den Materialeigenschaften des eutektischen Salzes entspricht. Änderungen dieses Temperaturschwellwerts sind nur sehr eingeschränkt möglich und erfordern dann ein kostenintensiven Entwicklungsaufwand, z.B. um ein neues entsprechendes Salz zu entwickeln. Dementsprechend lässt diese bekannte Lösung keine Einstellung des Temperaturschwellwerts ohne größeren Aufwand zu.

EP-A-1 239 432 betrifft ein Verfahren zur Ermittlung und Meldung von Überhitzungen und Feuer in einem Flugzeug, wobei das Verfahren ein optisches Verfahren ist, bei dem eine Glasfaser verwendet wird. Die Temperaturen werden hierbei mit Hilfe des Rayleigh-Streuungsprinzips im Glasfaserkabel ermittelt, indem die Temperaturabhängigkeit der Brechungseigenschaften des Glasfaserkabels genutzt wird. Mittels dem Fresnel-Effekt kann der Ort der Temperaturerhöhung festgestellt werden. Die verwendeten Lichtimpulse werden durch einen Laser erzeugt, der entsprechend an- und ausgeschaltet wird.

EP-A-0 940 789 betrifft ein Verfahren und einen Sensor zur Branddetektion mit Hilfe von Ultraschallsignalen und Lichtsignalen oder Mikrowellensignalen. Die Ultraschallsignale werden hierbei zusammen mit den Lichtsignalen oder Mikrowellensignalen von einer ersten Sendergruppe emittiert und die von einem Medium reflektierten Dopplersignale werden von einer entsprechenden Empfängergruppe empfangen. Durch Einzelauswertung und kombinatorische Auswertung der empfangenen Signale können Rauch, Partikel oder Veränderungen in einer Gaszusammensetzung im Detektionsbereich detektiert werden.

EP-A-0 692 705 betrifft eine Anordnung und ein Verfahren zur optischen Auswertung rückgestreuter Lichtsignale zur Bestimmung eines streckenabhängigen Messprofils eines Rückstreumediums. Beispielsweise kann das Verfahren zur Bestimmung eines Temperaturprofils des Rückstreumediums verwendet werden. Hierbei wird amplitudenmoduliertes und zeitlich in der Frequenz durchgestimmtes Licht in das Rückstreumedium eingestrahlt und das rückgestreute Licht mit Hilfe eines Referenzsignals und entsprechender Auswerteelektronik ausgewertet.

Es ist eine Aufgabe der vorliegenden Erfindung eine einfache Erfassung eines Ortes entlang einer Messleitung an dem eine Temperaturänderung stattfindet zu ermöglichen.

Gemäß einem Ausführungsbeispiel der vorliegenden Erfindung wird die obige Aufgabe mittels einer Erfassungseinrichtung nach Anspruch 1 gelöst, die einen Signalgenerator, eine Auswertelektronik und eine Messleitung aufweist. Der Signalgenerator speist ein Sendesignal in die Messleitung ein. Eine Auswertelektronik empfängt ein Antwortsignal der Messleitung auf das Sendesignal und ermittelt auf der Grundlage des Antwortsignals den Ort der Temperaturänderung.

In anderen Worten wird das Sendesignal in die Messleitung eingespeist und auf der Grundlage des Antwortsignals der Messleitung auf das Sendesignal wird durch die Auswertelektronik der Ort der Temperaturänderung bestimmt.

Vorteilhaft ermöglicht dies eine einfache, schnelle und genaue Bestimmung eines Ortes der Temperaturänderung. Beispielsweise bei einem Einsatz in einem Flugzeug lässt sich damit eine Genauigkeit derart erzielen, dass der Ort einer Leckage auf eine Wartungsklappe des Flugzeuges eingegrenzt werden kann, wodurch ein Wartungsaufwand im Leckagefall verringert wird.

Außerdem können aufgrund der vorliegenden Erfindung einfachere preisgünstigere Kabeltypen verwendet werden und es ist nicht erforderlich, zweiadrige Kabel mit eutektischen Salzen zu verwenden. Dadurch erhöht sich die Kosteneffizienz der Erfassungseinrichtung.

Gemäß einem besonders vorteilhaften Ausführungsbeispiel der vorliegenden Erfindung wird das FMCW (frequency modulated continuous wave)-Prinzip verwendet. Dabei wird ein frequenzmoduliertes, gewobbeltes Mikrowellensignal von dem Frequenzgenerator in die Messleitung, die beispielsweise ein ein, zwei oder mehradriges Kabel sein kann, eingespeist. Die Antwort der Messleitung auf das eingespeiste Signal, d.h. das reflektierte Signal wird mit dem Sendesignal gemischt oder multipliziert, wodurch eine Differenzfrequenz erzeugt wird, die die Entfernungsinformation enthält. Die Frequenz des Sendesignals wird linear mit der Zeit verändert. Auf diese Weise erhält man die Entfernungsinformation zur Störstelle (der Leckage oder des Ortes, wo die Temperaturveränderung stattfindet) im Frequenzbereich. Dies kann dann einfach beispielsweise über eine Fast-Fourier-Transformation ausgewertet werden.

Vorteilhaft wird dadurch die Detektion ohmscher, kapazitiver oder induktiver Änderungen der Messleitung durch übermäßige Erwärmung ermöglicht, was wiederum die Verwendung verschiedener Kabeltypen ermöglicht, so dass preisgünstig und leicht Überhitzungsdetektionskreise realisiert werden können. Auch lässt sich ein Alarmschwellwert und die Ansprechcharakteristik der Erfassungseinrichtung durch entsprechende Auswahl des Kabeltyps und durch Einstellung der Auswerteelektronik einfach in einem großen Bereich einstellen. Überdies kann durch eine adaptive Entzerrung und Bearbeitung im Bild- bzw. Frequenzbereich eine sehr hohe Messgenauigkeit erzielt werden, wodurch sich der Wartungsaufwand bei der Fehlersuche verringert. Vorzugsweise können im Wesentlichen alle Komponenten der Erfassungseinrichtung gemäß einem Ausführungsbeispiel der vorliegenden Erfindung (bis auf die Warndrähte, d.h. die Messleitungen) in digitaler Form realisiert werden, was für eine einfache und kostengünstigen Erfassungseinrichtung führt.

Weitere vorteilhafte Ausführungsbeispiele der vorliegenden Erfindung ergeben sich aus den Unteransprüchen.

Im Folgenden werden Ausführungsbeispiele der vorliegenden Erfindung unter Bezugnahme auf die begleitenden Figuren beschrieben.

Fig. 1 zeigt ein Ausführungsbeispiel der Anordnung von Messleitungen der Erfassungseinrichtung gemäß der vorliegenden Erfindung wie sie beispielsweise in einem Flugzeug des Typs Airbus A380 angeordnet werden können.

Fig. 2 zeigt ein vereinfachtes Blockschaltbild eines Ausführungsbeispiels der Erfassungseinrichtung gemäß der vorliegenden Erfindung.

Fig. 3 zeigt ein Zeitablaufdiagram, das einen Frequenzverlauf des Sendersignals und einen Frequenzverlauf des Empfangssignals in der Erfassungseinrichtung gemäß der vorliegenden Erfindung zeigt.

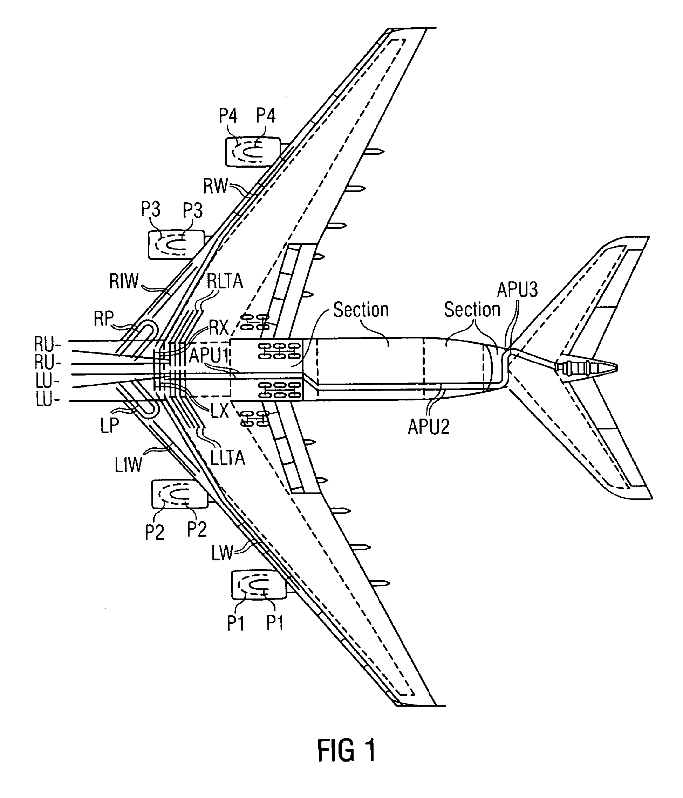

Im Folgenden wird mit Verweis auf die Figuren 1 bis 3 ein Ausführungsbeispiel der Erfassungseinrichtung zum Erfassen eines Ortes entlang einer Messleitung an dem eine Temperaturänderung stattfindet anhand einer Temperaturüberwachungseinrichtung für Heißluftversorgungsrohre eines Flugzeugs beschrieben. Es ist jedoch darauf hinzuweisen, dass die vorliegende Erfindung nicht auf die Anwendung in einem Flugzeug beschränkt ist. Auch ist die vorliegende Erfindung nicht auf die Erfassung eines Temperaturanstiegs begrenzt sondern auch auf die Erfassung eines lokalen Temperaturabfalls anwendbar. Ferner ist die vorliegende Erfindung auch beispielsweise für Feuerwarnanlagen sowohl in als auch außerhalb von Flugzeugen anwendbar.

Fig. 1 zeigt den Verlauf von Messleitungen oder Warndrähten entlang von Heißluftversorgungsrohren am Beispiel eines Flugzeugs des Typs Airbus 380. Wie der Fig. 1 zu entnehmen ist, weisen die Messleitungen eine große Länge auf, wodurch beispielsweise eine Verringerung eines Durchmessers der Messleitungen oder eine Verringerung des Gewichts der Struktur der Messleitung eine signifikante Gewichtsreduzierung für das Flugzeug mit sich bringen kann und damit auch eine Kraftstoffeinsparung. Auch ist Fig. 1 zu entnehmen, dass die Messdrähte sogar entlang der Heißluftzapfrohre im Triebwerksbereich angeordnet sind. Die in Fig. 1 verwendeten Bezeichnungen für die Messleitungen sind willkürlich und zeigen nur wie zusammengehörige Messleitungen verlegt werden können.

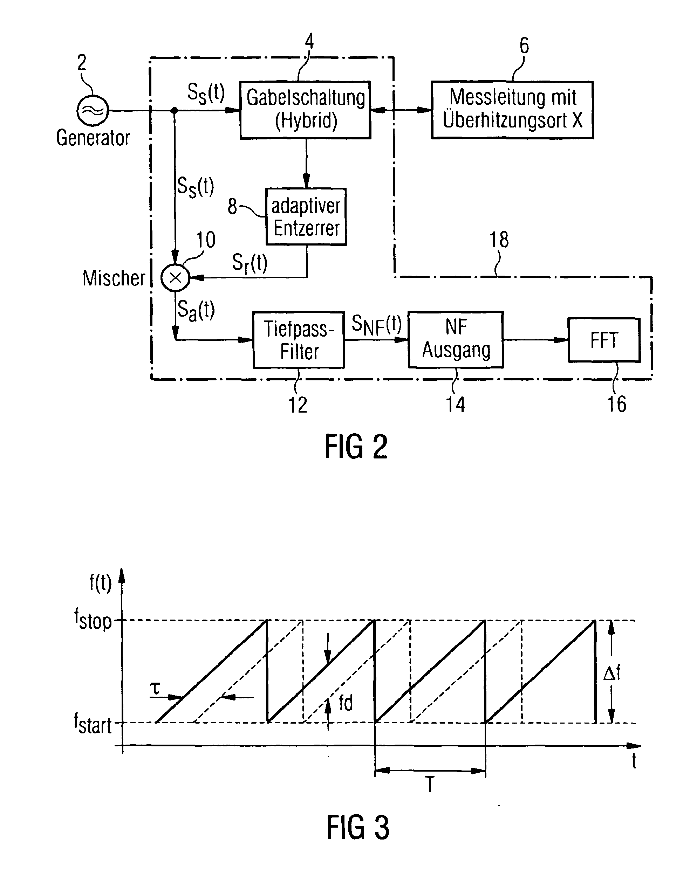

Fig. 2 zeigt ein vereinfachtes Blockdiagramm eines Ausführungsbeispiels einer Erfassungseinrichtung gemäß der vorliegenden Erfindung. Die Bezugsziffer 2 bezeichnet einen Signalgenerator, der das Signal $S_s(t)$ in eine Auswert-elektronik 18 einspeist, die das Signal $S_s(t)$ in die Messleitung 6 einspeist. Vorzugsweise wird das Signal $S_s(t)$ von dem Generator 2 über eine Gabelschaltung 4, die eine Hybridschaltung sein kann, in die Messleitung 6 eingespeist. Die Antwort der Messleitung 6 auf das eingespeiste Signal $S_s(t)$ wird von der Messleitung 6 zurück in die Auswertelektronik 18 geführt, nämlich in die Gabelschaltung 4, wo das Antwortsignal von der Messleitung, d.h. das von der Messleitung reflektierte Sendesignal $S_s(t)$ abgespalten wird und über einen adaptiven Entzerrer 8 als Signal $S_r(t)$ in ein Mischer (Multiplikator) 10 eingespeist wird. Der Mischer oder Multiplikator 10 multipliziert das Signal $S_s(t)$ mit dem Signal $S_r(t)$, um ein Signal $S_a(t)$ zu erhalten, das nach einer Tiefpassfilterung in einem Tiefpass 12 als Signal $S_{nf}(t)$ an einen NF-Ausgang 14 weitergeleitet wird, von dem es beispielsweise an einen Fast-Fourier-Transformator 16 weitergeleitet wird. NF steht im vorliegenden Beispiel für Niederfrequenz.

Die Funktionsweise, der in Fig. 2 dargestellten Erfassungseinrichtung wird im Folgenden detaillierter erläutert.

Wie zuvor angedeutet wird gemäß der vorliegenden Erfindung in vorteilhafter Art und Weise das FMCW (frequency modulated continuous wave)-Prinzip für Leitungen als Feuer- und Überhitzungswarnanlagensysteme verwendet. Dabei soll gemäß dem vorliegenden Ausführungsbeispiel eine übermäßige Erwärmung an irgendeinem Punkt entlang der gesamten Länge des Warndrahtkreislaufes, d.h. der Messleitung, z.B. im Flügel eines Flugzeugs ermittelt werden.

Fig. 3 zeigt ein Zeitablaufdiagram, das einen Frequenzverlauf des Sensorsignals $S_s(t)$ und des Empfangssi-gnals, nämlich des Signals, das von der Messleitung 6 als Antwort auf das Sendesignal $S_s(t)$ reflektiert wird, darstellt. Der Frequenzverlauf des Sendesignals $S_s(t)$ ist mit durchgezogener Linie dargestellt und der Frequenzverlauf des Empfangssignals, d.h. des Antwortsignals der Messleitung 6, ist mit einer strichpunktierten Linie dargestellt. Wie Fig. 3 zu entnehmen ist, verändert der Signalgenerator 2 die Frequenz des Sendesignals $S_s(t)$ vorzugsweise im Mikrowellenfrequenzbereich zwischen der Frequenz $f_{stop}$ und $f_{start}$. Ein Frequenzunterschied von $f_{stop}$ and $f_{start}$ wird als $\Delta f$ oder Frequenzhub bezeichnet.

Nun wird im Folgenden die Funktionsweise der in Fig. 2 dargestellten Erfassungseinrichtung erläutert, wenn der Signalgenerator 2 das in Fig. 3 dargestellte Sendesignal $S_s(t)$ über die Auswerteelektronik 18 in die Messleitung 6 einspeist und die Auswerteelektronik 18 das von der Messleitung 6 reflektierte Signal gemäß des FMCW-Verfahrens analysiert.

Unter der Voraussetzung, dass eine Periodendauer T des Sendesignals $S_s(t)$ erheblich größer als eine Laufzeit $\tau$ des Empfangsignals ist, entsteht durch Multiplikation (mittels des Mischers 10) des Gesendeten mit dem reflektierten Signal eine Differenzfrequenz $f_d$, die die Entfernungsinformation enthält. Die Frequenz $f(t)$ des Signalgenerators 2, der beispielsweise eine Wobbelquelle ist, wird gemäß einem Ausführungsbeispiel der vorliegenden Erfindung linear mit der Zeit verändert.

Unter der Annahme der in Fig. 3 gezeigten Wobbelung zwischen den Frequenzen $f_{start}$ und $f_{stop}$ mit der Zeit T gilt für eine Wobbelperiode $0 < t \leq T$:

$$\Omega(t) = 2 \cdot \pi \cdot f_{start} + 2 \cdot \pi \cdot \Delta f \cdot \frac{t}{T} = \Omega_{start} + \Delta\Omega \cdot \frac{t}{T}$$

Dabei gilt: T = die Periodendauer[s]; f = Frequenz [Hz] und $\Delta f$ = Frequenzhub [Hz].

Der Frequenzhub berechnet sich wie folgt:

$$B = \Delta f = f_{stop} - f_{start} \ .$$

Ein Phasenverlauf $\phi(t)$ des gesendeten Signals lässt sich durch eine Integration der sich zeitlich ändernden Frequenz $\Omega(t) = 2 \cdot \pi \cdot f(t)$ ermitteln:

$$\varphi(t) = \int \left( \Delta\Omega \cdot \frac{t}{T} + \Omega_{start} \right) dt = \left( \frac{\Delta\Omega}{2 \cdot T} \cdot t + \Omega_{start} \right) \cdot t + \varphi_0 \ .$$

Das Sendesignal ergibt sich dann als:

$$S_S(t) = \hat{u} \cdot \sin\left( \left( \frac{\Delta\Omega}{2 \cdot T} \cdot t + \Omega_{start} \right) \cdot t + \varphi_0 \right) .$$

Dementsprechend wird, wie Fig. 2 zu entnehmen ist, ein Teil des Sendesignals $S_s(t)$ auf einen Lokaloszillatoreingang eines Empfangsmischers gegeben. Das von der Messleitung 6 reflektierte Signal $S_r(t)$, das über eine hybride Gabelschaltung herausgefiltert worden ist und mittels eines adaptiven Entzerrers 8 entzerrt wurde, gelangt dann auf einen Signalausgang des Mischers 10.

Das Empfangssignal $S_r(t)$ ist bei einer idealisierten Störstelle das um die Laufzeit $\tau$ verzögerte und um den Faktor A gedämpfte Sendesignal (see Fig. 3):

$$S_r(t) = \hat{u} \cdot A \cdot \sin\left( \left( \frac{\Delta\Omega}{2 \cdot T} \cdot (t - \tau) + \Omega_{start} \right) \cdot (t - \tau) + \varphi_0 \right).$$

Eine Überlagerung von Lokaloszillator und Signal erzeugt während der Period T im Mischer eine Differenzfrequenz $f_d$, die von dem Frequenzhub $B = \Delta f = f_{stop} - f_{start}$, der Wiederholungsfrequenz F und der Laufzeit $\tau$ des empfangenen Signals abhängt.

Das Ausgangssignal aus dem Mischer oder Multiplikator 10 $S_a(t)$ kann nun wie folgt beschrieben werden:

$$S_a(t) = \frac{\hat{u}^2}{2} \cdot A \cdot \left[ \cos\left( \frac{\Delta\Omega \cdot \tau}{T} \cdot t - \frac{\Delta\Omega \cdot \tau^2}{2 \cdot T} + \Omega_{start} \cdot \tau \right) - \cos\left( \left( \frac{\Delta\Omega}{T} \cdot (t - \tau) + 2 \cdot \Omega_{start} \right) \cdot t + \frac{\Delta\Omega \cdot \tau^2}{2 \cdot T} - \Omega_{start} \cdot \tau + 2 \cdot \varphi_0 \right) \right]$$

Dieses Ausgangssignal besteht jetzt aus einer Differenz- und einer Summenfrequenz. Dabei ist jedoch nur die Differenzfrequenz von Interesse, da in der Differenzfrequenz die Entfernungsinformation von dem Anfang der Messleitung 6 zum Überhitzungsort enthalten ist. Ein Konversionswirkungsgrad k des Mischers 10 ist hier noch nicht berücksichtigt worden. Nach einer Tiefpassfilterung mittels des Tiefpassfilters 12 erhält man nun das niederfrequente Signal $S_{NF}(t)$, also die Differenzfrequenz:

$$S_{NF}(t) = \frac{\hat{u}^2}{2} \cdot A \cdot \cos\left( \frac{\Delta\Omega \cdot \tau}{T} \cdot t - \frac{\Delta\Omega \cdot \tau^2}{2 \cdot T} + \Omega_{start} \cdot \tau \right).$$

Die Verzögerungszeit $\tau$ des Signals ergibt sich durch die Entfernung $1_X$ und der Übertragungsgeschwindigkeit $V_P$:

$$\tau = \frac{2 \cdot l_X}{V_P}.$$

Wie der Fig. 3 zu entnehmen ist, ist die Differenzfrequenz $f_d$ zwischen der Lokaloszillatorfrequenz und der Signalfrequenz (zwischen $S_s(t)$ und $S_r(t)$) konstant und kann durch folgende Beziehung beschrieben werden:

$$f_d = \frac{\Delta f}{T} \cdot \tau = \frac{\Delta f}{T} \cdot \frac{2 \cdot l_X}{V_P}.$$

Die Entfernungsinformation zur Störstelle (Leckage) erhält man im Frequenzbereich. Dadurch kann diese auf einfacher Art und Weise beispielsweise über eine Fast-Fourier-Transformation (FFT) ermittelt werden. Allerdings kann das Signal $S_{NF}(t)$ auch mittels des NF-Ausgangs 14 an eine andere Auswerteeinrichtung weitergegeben werden, beispielsweise an einen Bordcomputer eines Flugzeugs. Dann kann beispielsweise die Fast-Fourier-Transformation einfach softwareseitig ausgeführt werden. Bei einer übermäßigen Erwärmung an einer Störstelle erhält man im Spektrum eine Spektrallinie bei der Differenzfrequenz $f_d$. Ohne Tiefpassfilterung gäbe es noch unendlich viele Spektrallinien ab der Frequenz $f_{summe}(t = 0) = -f_d + 2 \cdot f_{start}$ bis zur halben Abtastfrequenz fa; wobei gilt: $f_{stop}$ = fa/2. Dies entspricht auch gleichzeitig der Nyquistfrequenz. Die Summenfrequenz erhöht sich kontinuierlich mit der Zeit, wie mittels folgenden Ausdrucks beschrieben werden kann:

$$f_{summe} = \frac{\Delta f}{T} \cdot (t - \tau) + 2 \cdot f_{start}.$$

Die Differenzfrequenz $f_d$ dahingehend bleibt konstant. Die Signalenergie der beiden Frequenzen ist gleich groß. Deshalb sieht man im Spektrum (ohne Tiefpassfilterung) eine große Line ($f_d$) und unendlich viele kleine Linien (Summenfrequenzen).

Zusammenfassend betrifft die vorliegende Erfindung also eine Nutzung des FMCW-Verfahrens für Messleitungen als Feuer- und/oder Überhitzungswarnanlagen. Dabei wird beispielsweise eine übermäßige Erwärmung an irgendeinem Punkt entlang der Messleitung ermittelt. Gemäß einem weiteren vorteilhaften Ausführungsbeispiel der vorliegenden Erfindung wird beispielsweise ein Gradient, d.h. die Schnelligkeit des Temperaturanstiegs und/oder die Umgebungstemperatur innerhalb eines Toleranzbereichs berechnet. Diese Information wird gemäß einen Ausführungsbeispiel zur qualitativen Beurteilung einer Heißluftleckage und/oder zur Definition einer Vorwarnung genutzt werden.

Die Lokalisierung der Überhitzungsstelle im Mikrowellenbereich mit Hilfe des FMCW-Systems hat neben der einfachen Realisierung und dem geringen Aufwand noch den Vorteil, dass beispielsweise mittels Digitalisierung eine solche Lösung sehr kostengünstig zu realisieren ist.

Auch erlaubt beispielsweise die digitale Ausgestaltung der Erfassungseinrichtung gemäß der vorliegenden Erfindung ein einfaches Einstellen einer Temperaturschwelle bei der bei Überschreiten, Unterschreiten oder Durchschreiten beispielsweise ein Alarm ausgegeben wird. Überdies wird eine sehr hohe Messgenauigkeit erzielt.

In anderen Worten ermöglicht die oben angegebene Vorrichtung und das entsprechende Verfahren die Detektion ohmscher, kapazitiver oder induktiver Änderungen der Messleitung

durch übermäßige Erwärmung. Auf diese Weise wird vorteilhaft die Verwendung

verschiedener Kabeltypen ermöglicht, wodurch eine preisgünstige und leichte

Überhitzungsdetektion beispielsweise für Flugzeuge erzielt werden kann. Der Alarmschwellwert und die Ansprechcharakteristik kann durch entsprechende Auswahl des Messkabeltyps und durch Einstellung der Parameter der Bauelemente der Auswertelektronik 18 in einem großen Bereich eingestellt werden. Durch die adaptive Entzerrung und Bearbeitung im Bild- bzw. Frequenzbereich wird eine sehr hohe Messgenauigkeit erzielt. Auf diese Weise wird ein Wartungsaufwand bei der Fehlersuche zum Beispiel bei einer Leckage im Flugzeug minimiert.

## Patentansprüche

1. Erfassungseinrichtung für eine Überhitzungs- oder Feuerwarnanlage für ein Flugzeug zum Erfassen eines Ortes entlang einer Messleitung an dem eine Temperaturänderung stattfindet, umfassend:

   einen Signalgenerator (2);
   eine Auswerteelektronik (18); und
   eine Messleitung (6);
   wobei der Signalgenerator ein Speisesignal in die Messleitung einspeist;
   wobei das Speisesignal frequenzmoduliert ist;
   wobei die Auswerteelektronik (18) ein Antwortsignal der Messleitung auf das Speisesignal empfängt;
   wobei die Auswerteelektronik (18) ausgestaltet ist, das Antwortsignal gemäß dem FMCW (Frequency Modulated Continuous Wave)-Verfahren zu analysieren und auf der Grundlage des Antwortsignals den Ort der Temperaturänderung zu bestimmen;
   wobei das Speisesignal ein Mikrowellensignal ist; und
   wobei die Erfassungseinrichtung dazu ausgeführt ist, ohmsche, kapazitative oder induktive Änderungen der Messleitung durch Erwärmung zu detektieren.

2. Erfassungseinrichtung nach Anspruch 1,
   wobei der Signalgenerator (2) ausgestaltet ist, eine Frequenz des Speisesignals zwischen einer oberen Grenzfrequenz und einer unteren Grenzfrequenz linear zu verändern.

3. Erfassungseinrichtung nach einem der Ansprüche 1-2,
   wobei die Auswerteelektronik (18) mit dem Signalgenerator (2) verbunden ist; wobei die Auswerteelektronik (18) einen Mischer (10) aufweist zum Mischen des Speisesignals mit dem Antwortsignal um ein Differenzfrequenzsignal zu bilden; und
   wobei das Differenzfrequenzsignal Entfernungsinformation enthält und die Auswerteelektronik (18) ausgestaltet ist, den Ort der Temperaturänderung auf der Grundlage dieser Entfernungsinformation zu bestimmen.

4. Erfassungseinrichtung nach Anspruch 3,
   wobei die Auswerteelektronik (18) einen Tiefpassfilter aufweist;
   wobei die Auswertelektronik (18) ausgestaltet ist, eine Fast-Fourier-Transformation des Differenzfrequenzsignals auszuführen;
   wobei die Entfernungsinformation im Frequenzbereich des Differenzfrequenzsignals ist;
   wobei des Antwortsignal das von der Messleitung (6) reflektierte Speisesignal ist; und
   wobei die Auswerteelektronik (18) im Wesentlichen aus digitalen Bauelementen besteht.

**5.** Erfassungseinrichtung nach einem der vorangehenden Ansprüche,
wobei die Auswerteelektronik (18) ausgestaltet ist, einen Gradienten der Temperaturänderung zu bestimmen.

**6.** Erfassungseinrichtung nach einem der vorangehenden Ansprüche,
wobei in der Auswerteelektronik (18) eine Temperaturschwelle einstellbar ist, bei deren Durchschreiten ein Alarm ausgegeben wird; und
wobei die Auswerteelektronik (18) ausgestaltet ist, einen Gradienten der Temperaturänderung über die Zeit zu bestimmen.

**7.** Erfassungseinrichtung nach einem der vorangehenden Ansprüche,
wobei die Erfassungseinrichtung eine Überhitzungswarnanlage oder eine Feuerwarnanlage für Heißluftversorgungsrohre in einem Flugzeug ist.

**8.** Verfahren für eine Überhitzungs- oder Feuerwarnanlage zum Erfassen eines Ortes entlang einer Messleitung (6) in einem Flugzeug an dem eine Temperaturänderung stattfindet, umfassend die Schritte:

Einspeisen eines frequenzmodulierten Mikrowellen-Speisesignals in eine Messleitung (6); Empfangen eines Antwortsignals der Messleitung (6) auf das Speisesignal;
Detektieren von ohmschen, kapazitiven oder induktiven Änderungen der Messleitung durch Erwärmung;
Analyse des Antwortsignals gemäß dem FMCW (Frequency Modulated Continuous Wave)-Verfahren; und
Bestimmen des Ortes der Temperaturänderung auf der Grundlage des Antwortsignals.

**9.** Verfahren nach Anspruch 8,
wobei eine Frequenz des Speisesignals zwischen einer oberen Grenzfrequenz und einer unteren Grenzfrequenz linear verändert wird.

**10.** Verfahren nach einem der Ansprüche 8-9, ferner umfassend die Schritte :

Mischen des Speisesignals mit dem Antwortsignal um ein Differenzfrequenzsignal zu bilden;
Bestimmen des Ortes der Temperaturänderung auf der Grundlage des Differenzfrequenzsignals, wobei das Differenzfrequenzsignal Entfernungsinformation enthält; und
Tiefpassfiltern des Antwortsignals, das das von der Messleitung (6) reflektierte Speisesignal ist;
Bestimmen eines Gradienten der Temperaturänderung; und
Einstellen einer Temperaturschwelle, bei deren Durchschreiten ein Alarm ausgegeben wird.

**11.** Flugzeug mit einer Erfassungseinrichtung nach einem der Ansprüche 1 bis 7.

**Claims**

**1.** A detecting device for an overheating warning device or fire warning device for an aircraft for detecting a location along a measuring line, at which location a temperature change takes place, comprising:

a signal generator (2);
evaluation circuit (18); and
a measuring line (6);
wherein the signal generator feeds a feed signal into the measuring line;
wherein the feed signal is frequency-modulated;
wherein the evaluation circuit (18) receives a response signal of the measuring line in response to the feed signal;
wherein the evaluation circuit (18) is arranged to analyze the response signal on the basis of the FMCW (frequency modulated continuous wave) principle and to determine the location where the temperature change occurs, on the basis of the response signal;
wherein the feed signal is a microwave signal; and
wherein the registering device is adapted for detecting ohmic, capacitive or inductive changes of the measuring line due to heating.

**2.** The detecting device according to claim 1,
wherein the signal generator (2) is designed to cause a linear change in a frequency of the feed signal between an upper limiting frequency and a lower limiting frequency.

3. The detecting device according to one of claims 1 or 2,
   wherein the evaluation circuit (18) is connected to the signal generator;
   wherein the evaluation circuit (18) comprises a mixer (10) for mixing the feed signal with the response signal to form a differential frequency signal; and
   wherein the differential frequency signal contains distance information, and wherein the evaluation circuit (18) is arranged to determine the location where the temperature change occurs, on the basis of the response signal.

4. The detecting device according to claim 3,
   wherein the evaluation circuit (18) comprises a low-pass filter;
   wherein the evaluation circuit (18) is adapted to carry out a Fast-Fourier transformation of the differential frequency signal;
   wherein the distance information is in the frequency range of the differential frequency signal;
   wherein the response signal is the feed signal reflected by the measuring line (6); and wherein the evaluation circuit (18) essentially comprises digital components.

5. The detecting device according to one of the preceding claims,
   wherein the evaluation circuit (18) is adapted to determine a gradient of the temperature change.

6. The detecting device according to one of the preceding claims,
   wherein, in the evaluation circuit (18), a temperature threshold can be set so that an alarm is output if the temperature threshold is exceeded; and
   wherein the evaluation circuit (18) is arranged to determine a gradient of the temperature change over time.

7. The detecting device according to one of the preceding claims,
   wherein the detecting device is an overheating warning system or a fire warning system for hot-air supply pipes in an aircraft.

8. A method for an overheating warning device or fire warning device for detecting a location along a measuring line (6) in an aircraft, at which location a temperature change takes place, comprising the following steps:

   feeding a frequency modulated microwave feed signal into a measuring line (6);
   receiving a response signal of the measuring line (6) in response to the feed signal;
   detecting an ohmic, capacitive or inductive change of the measuring line due to heating;
   analyzing the response signal according to the FMCW (frequency modulated continuous wave) principle; and
   determining the location where the temperature change occurs on the basis of the response signal.

9. The method according to claim 8,
   wherein a frequency of the feed signal between an upper limiting frequency and a lower limiting frequency is changed in a linear way.

10. The method according to one of claims 8-9, further comprising the following steps:

    mixing the feed signal with the response signal to form a differential frequency signal;
    determining the location, where the temperature change occurs, on the basis of the differential frequency signal, wherein the differential frequency signal contains distance information; and
    low-pass filtering of the response signal which is the feed signal reflected by the measuring line (6);
    determining a temperature change gradient; and
    setting a temperature threshold, wherein an alarm is output if said temperature threshold is exceeded.

11. Aircraft, comprising a detecting device according to one of claims 1 to 7.

**Revendications**

1. Dispositif de détection pour une installation d'alarme incendie ou de surchauffe pour un avion, destiné à la détection le long d'une ligne de mesure d'un emplacement, auquel se produit un changement de température, comprenant :

- un générateur de signaux (2) ;
- une électronique d'évaluation (18) ; et
- une ligne de mesure (6) ;

dispositif dans lequel

- le générateur de signaux injecte un signal d'alimentation dans la ligne de mesure ;
- le signal d'alimentation est modulé en fréquences ;
- l'électronique d'évaluation (18) reçoit de la ligne de mesure un signal de réponse au signal d'alimentation ;
- l'électronique d'évaluation (18) est conçue pour analyser le signal de réponse suivant le procédé FMCW (Frequency Modulated Continuous Wave) et pour déterminer l'emplacement du changement de température sur la base du signal de réponse ;
- le signal d'alimentation est un signal à hyperfréquences ; et
- le dispositif de détection est réalisé pour détecter des variations ohmiques, capacitives ou inductives de la ligne de mesure par échauffement.

2. Dispositif de détection selon la revendication 1, dans lequel le générateur de signaux (2) est conçu pour modifier linéairement une fréquence du signal d'alimentation entre une fréquence de coupure supérieure et une fréquence de coupure inférieure.

3. Dispositif de détection selon l'une des revendications 1 - 2, dans lequel

- l'électronique d'évaluation (18) est reliée au générateur de signaux (2) ;
- l'électronique d'évaluation (18) présente un mélangeur (10) pour le mélange du signal d'alimentation au signal de réponse, afin de former un signal de fréquence différentielle ; et
- le signal de fréquence différentielle renferme une information de distance et l'électronique d'évaluation (18) est conçue pour déterminer l'emplacement du changement de température sur la base de cette information de distance.

4. Dispositif de détection selon la revendication 3, dans lequel

- l'électronique d'évaluation (18) présente un filtre passe-bas ;
- l'électronique d'évaluation (18) est conçue pour réaliser une transformée de Fourier rapide du signal de fréquence différentielle ;
- l'information de distance se situe dans la gamme de fréquences du signal de fréquence différentielle ;
- le signal de réponse est le signal d'alimentation réfléchi par la ligne de mesure (6) ; et
- l'électronique d'évaluation (18) est essentiellement constituée de composants numériques.

5. Dispositif de détection selon l'une des revendications précédentes, dans lequel l'électronique d'évaluation (18) est conçue pour déterminer un gradient du changement de température.

6. Dispositif de détection selon l'une des revendications précédentes, dans lequel

- un seuil de température, en cas de franchissement duquel est émise une alarme, est réglable dans l'électronique d'évaluation (18) ; et
- l'électronique d'évaluation (18) est conçue pour déterminer un gradient du changement de température par rapport au temps.

7. Dispositif de détection selon l'une des revendications précédentes, dans lequel le dispositif de détection est une installation d'alarme de surchauffe ou une installation d'alarme incendie pour des conduites de distribution d'air chaud d'un avion.

8. Procédé pour une installation d'alarme incendie ou de surchauffe, destiné à la détection d'un emplacement le long d'une ligne de mesure (6) dans un avion, auquel se produit un changement de température, comprenant les étapes :

- injection d'un signal d'alimentation à hyperfréquences, modulé en fréquences, dans une ligne de mesure (6) ;
- réception d'un signal de réponse de la ligne de mesure (6) au signal d'alimentation ;
- détection de variations ohmiques, capacitives ou inductives de la ligne de mesure par échauffement ;

- analyse du signal de réponse suivant le procédé FMCW (Frequency Modulated Continuous Wave) ; et
- détermination de l'emplacement du changement de température sur la base du signal de réponse.

9. Procédé selon la revendication 8, dans lequel une fréquence du signal d'alimentation est modifiée linéairement entre une fréquence de coupure supérieure et une fréquence de coupure inférieure.

10. Procédé selon l'une des revendications 8 - 9, comprenant en outre les étapes :

- mélange du signal d'alimentation au signal de réponse afin de former un signal de fréquence différentielle ;
- détermination de l'emplacement du changement de température sur la base du signal de fréquence différentielle, le signal de fréquence différentielle renfermant une information de distance ; et
- filtrage en passe-bas du signal de réponse, qui est le signal d'alimentation réfléchi par la ligne de mesure (6);
- détermination d'un gradient du changement de température ; et
- réglage d'un seuil de température, en cas de franchissement duquel est émise une alarme.

11. Avion avec un dispositif de détection selon l'une des revendications 1 à 7.

FIG 1

FIG 2

FIG 3

**IN DER BESCHREIBUNG AUFGEFÜHRTE DOKUMENTE**

**In der Beschreibung aufgeführte Patentdokumente**

- EP 1239432 A
- EP 0940789 A
- EP 0692705 A